# EUROPÄISCHE PATENTSCHRIFT

(11) **EP 0 461 367 B1**
(45) Veröffentlichungstag und Bekanntmachung des Hinweises auf die Patenterteilung: **24.08.1994**
(21) Anmeldenummer: 91106392.3
(22) Anmeldetag: 20.04.1991
(51) Int. Cl.: F41H 5/26

(54) **Winkelspiegel für Kampfpanzer**
Angle mirror for combat tanks
Miroir d'angle pour chars de combat

(30) Priorität: 12.05.1990 DE 4015346
(43) Veröffentlichungstag der Anmeldung: 18.12.1991
(60) Teilanmeldung: 94102179.2
(73) Patentinhaber: Wegmann & Co. GmbH, D-34127 Kassel (DE)
(72) Erfinder: Sprafke, Uwe, Dipl.-Ing., W-3501 Schauenburg-Elmshagen (DE)
(74) Vertreter: Feder, Wolf-Dietrich, Dr. Dipl.-Phys.

(56) Entgegenhaltungen:
- DE-A- 3 305 882
- DE-C- 661 055
- US-A- 4 737 023

## Beschreibung

Die Erfindung betrifft ein Kampffahrzeug, insbesondere einen Kampfpanzer, mit einer im gepanzerten Gehäusedach des Fahrzeugs angeordneten Luke, bei dem in der unmittelbaren Umgebung der Luke Winkelspiegel angeordnet sind, die jeweils ein im Außenraum angeordnetes Ausblickteil und ein im Innenraum des Fahrzeugs angeordnetes Einblickteil aufweisen, wobei zwischen Ausblickteil und Einblickteil ein durch das Gehäusedach geführter Sichtkanal für den optischen Strahlengang angeordnet ist.

Kampffahrzeuge mit einer Winkelspiegelanordnung dieser Art sind an sich bekannt (siehe z.B. DE- 33 05 882 A1).

In dem Dokument US-A- 4 737 023 ist ein binokulares, mehrteiliges Periskop beschrieben, das am Gehäusedach eines Kampffahrzeuges angeordnet ist, wobei im Außenraum ein Ausblickteil angeordnet ist und sich im Innenraum des Fahrzeugs ein Einblickteil befindet. Ein im Ausblickteil angeordnetes Prisma besitzt ein mit ihm einstückig verbundenen Glaskörper, der den Sichtkanal bildet und innerhalb eines Rahmenteils durch die Dachplatte des Fahrzeugs hindurchgeführt ist. Es ist dabei darauf hingewiesen, daß der über die Dachplatte hinausragende Abschnitt des Rahmenteils mit einer gepanzerten Schutzabdeckung versehen sein kann.

Es hat sich herausgestellt, daß insbesondere die Bedrohung von gepanzerten Kampffahrzeugen aus der Luft die Schutztechnologie vor eine Reihe schwieriger Probleme stellt. Gegen Hohlladungen sind sowohl reaktive als auch passive Schutzvorkehrungen möglich, wobei die reaktive Schutzvorkehrung die wirksamere ist. Aufgrund ihres Aufbaues kann jedoch die reaktive Schutzvorkehrung in enge Zwischenräume am Kampffahrzeug, die beispielsweise durch Winkelspiegel entstehen, nicht eingebracht werden. Auf diese Weise entstehen ungeschützte Stellen am Kampffahrzeug.

Ein weiteres Problem stellen die Winkelspiegel selbst dar. Es ist bekannt, sie, wie eingangs erwähnt, aus einem an der Außenseite des Kampffahrzeugs angeordneten Ausblickteil und einen im Kampffahrzeug angeordneten Einblickteil aufzubauen, zwischen denen ein freier Sichtkanal für den optischen Strahlengang verbleibt. Aus Gewichtsgründen werden die meisten Winkelspiegel aus Kunststoff hergestellt, was zur Folge hat, daß sich mit den Winkelspiegeln selbst die ungeschützten Flächen am Kampffahrzeug vergrößern.

Der Erfindung liegt die Aufgabe zugrunde, ein Kampffahrzeug mit den eingangs erwähnten Merkmalen so auszubilden, daß die Anordnung der Winkelspiegel in der unmittelbaren Umgebung einer Luke keine Schwachstelle im Hinblick auf die Schutzvorkehrungen darstellt.

Die Lösung dieser Aufgabe erfolgt erfindungsgemäß mit den Merkmalen aus dem kennzeichnenden Teil des Patentanspruchs 1. Vorteilhafte Weiterbildungen der Erfindung sind in den Unteransprüchen beschrieben.

Der Grundgedanke der Erfindung besteht darin, durch die Anordnung des Sichtkanals in einem eigenen Schutzblock und die mindestens teilweise Ausfüllung dieses Sichtkanals mit optischem, also durchsichtigem Glas, dafür zu sorgen, daß in diesem Bereich keine Lücken im Schutz auftreten. Es hat sich gezeigt, daß die teilweise Ausfüllung des Sichtkanals mit optischem Glas einen guten Schutz insbesondere gegen Hohlladungen bildet.

Besonders vorteilhaft ist dabei, daß der Schutzblock bzw. die Schutzblöcke in Schichtbauweise aus einzelnen übereinandergestapelten Plattenelementen hergestellt sind.

Diese Plattenelemente sind aus Glas, beispielsweise durchsichtigem Panzerglas, hergestellt. Bei einer solchen Ausführungsform sind keine besonderen Durchbrüche in den Plattenelementen notwendig und das Einblickteil schließt sich unmittelbar an das unterste Plattenelement an. Durch den Aufbau des Schutzblockes aus Plattenelementen kann man in besonders flexibler Weise den Anforderungen an die Schutzstärke gerecht werden und es läßt sich, wie weiter unten anhand eines Ausführungsbeispiels beschrieben, die Höhe des Schutzblockes so ausgestalten, daß das Ausblickteil in einer vorgegebenen Höhe über dem Lukenrand angeordnet ist. Dies hat zur Folge, daß bei geöffneter Luke ein direkter Ausblick durch entsprechende im Ausblickteil vorgesehene Durchblicksöffnungen möglich ist, wobei der Kopf des Beobachters durch die Schutzblöcke gegen Beschuß von außen mindestens teilweise gesichert ist.

Wie weiter unten anhand eines Ausführungsbeispiels beschrieben, kann hierbei der direkte Ausblick durch die Durchblicköffnungen der Ausblickteile ermöglicht werden, indem die in den Ausblickteilen angeordneten Spiegel in bekannter Weise als halbdurchlässige Spiegel ausgestaltet werden.

Im folgenden wird anhand der beigefügten Zeichnungen Ausführungsbeispiel für ein Kampffahrzeuge nach der Erfindung näher erläutert.

In den Zeichnungen zeigen:
- Fig. 1: in einer perspektivischen stark schematisierten Darstellung einen Teil des Gehäusedaches eines Kampfpanzers mit um eine Luke angeordneten Winkelspiegeln;
- Fig. 2: einen Vertikalschnitt nach der Linie II-II in Fig. 1.

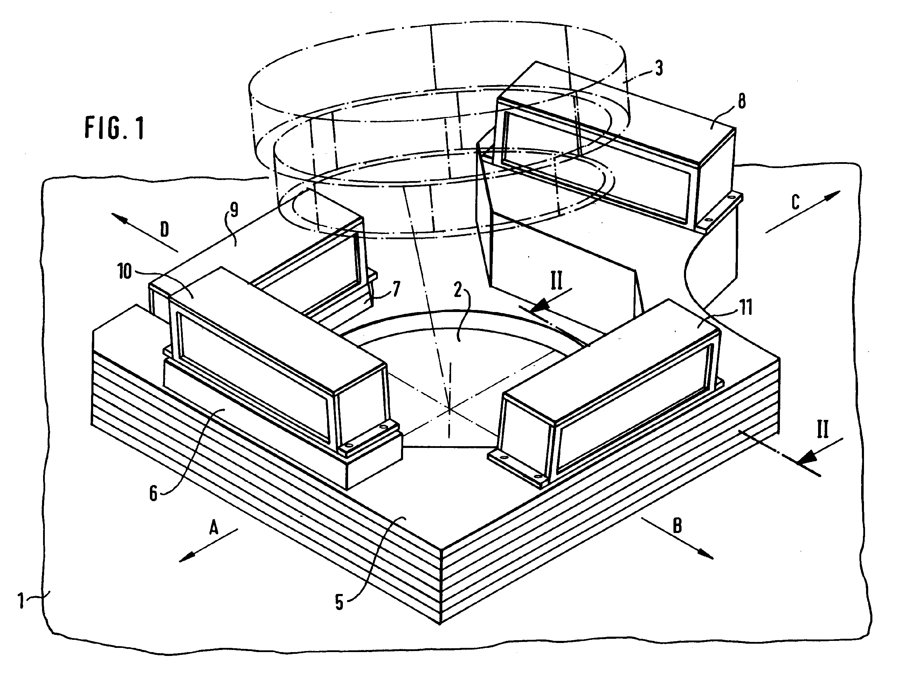

Fig. 1 zeigt einen Teil des Gehäusedachs 1 eines im übrigen nicht dargestellten Kampfpanzers in der Umgebung einer Luke 2, die mit einem gestrichelt angedeuteten Lukendeckel 3 verschließbar ist, der in üblicher Weise über eine nicht dargestellte Schwenkvorrichtung mit dem Gehäusedach 1 verbunden ist. In der Darstellung von Fig. 1 ist der Lukendeckel 3 teilweise angehoben, aber nicht weggeschwenkt oder weggeklappt gezeigt.

Um die Luke 2 herum sind insgesamt vier Winkelspiegel angeordnet.

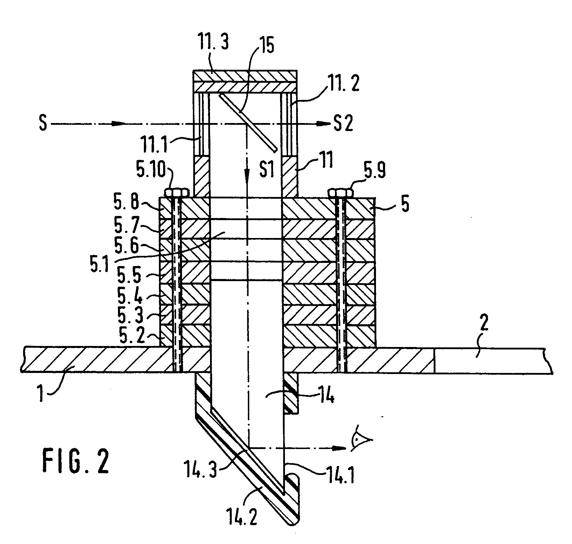

Von diesen Winkelspiegeln sind in Fig. 1 lediglich die Ausblickteile 8 - 11 und in Fig. 2 das Ausblickteil 11 und das im Inneren des Kampfpanzers angeordnete Einblickteil 14 dargestellt. Bei allen Winkelspiegeln befindet sich zwischen dem Ausblickteil 8 - 11 und dem Einblickteil ein durch das Gehäusedach geführter Sichtkanal. Diese Sichtkanäle sind jeweils innerhalb eines auf das Gehäusedach 1 aufgesetzten Schutzblockes 5 aus Panzerglas angeordnet. Wie Fig. 1 zu entnehmen umfaßt der Schutzblock 5 die Luke 2 in seiner vollen Höhe auf drei Seiten in den Richtungen A, B, C. Auf den Schutzblock 5 sind die Ausblickteile 8 und 11 direkt aufgesetzt, während das Ausblickteil 10 unter Zwischenschaltung eines Zwischenstückes 6 aufgesetzt ist und somit höher steht als die Ausblickteile 8 und 11. An der noch verbleibenden Seite der Luke 2 in Richtung D ist ein niedrigerer Schutzblock 7 angeordnet, auf den das Ausblickteil 9 aufgesetzt ist. Der Schutzblock 5 setzt sich, wie weiter unten beschrieben, aus acht übereinandergestapelten Plattenelementen zusammen, während der Schutzblock 7 in der gleichen Weise nur zwei Plattenelementen aufgebaut ist, die gegebenenfalls einstückig mit den entsprechenden Plattenelementen des Schutzblocks 5 verbunden sein können.

Anhand von Fig. 2 wird nun der Aufbau des Winkelspiegels mit dem Ausblickteil 11 und dem Einblickteil 14 auf dem Schutzblock 5 näher erläutert. Die übrigen Winkelspiegel sind in analoger Weise aufgebaut.

Der auf das Gehäusedach 1 aufgesetzte Schutzblock 5 ist aus einzelnen übereinandergestapelten Plattenelementen 5.2 bis 5.8 aufgebaut, die entweder wie dargestellt mittels Schraubenbolzen 5.9 und 5.10 zusammengehalten oder in einem eigenen Gehäuse als Gesamtblock mit dem , Gehäusedach 1 verschraubt sind. Im Schutzblock 5 befindet sich der Sichtkanal 5.1, in den von unten vom Inneren des Kampfpanzers her das Einblickteil 14, das aus optischem Glas besteht, eingeschoben ist. Ein Teil des Sichtkanals 5.1 entsteht durch Freilassen von entsprechenden Durchbrüchen in den Plattenelementen 5.2 bis 5.4. Die Plattenelemente 5.5 bis 5.8 sind ohne Durchbrüche hergestellt und bestehen aus durchsichtigem Panzerglas. In diesem Fall ergibt sich ein Teil des Sichtkanals, der mit optischem Glas ausgefüllt ist, das bereits einstückig mit dem Material des Schutzblockes verbunden ist.

Das Einblickteil 14 besitzt eine Einblicköffnung 14.1 und ist mit einer Schutzkappe 14.2 versehen. Das Ausblickteil 11 ist als Tubus ausgebildet, der auf der Oberseite des Schutzblocks 5 aufgesetzt und mit diesem fest verbunden ist. Das Ausblickteil 11 besitzt an seiner nach außen gerichteten Vorderseite eine Ausblicköffnung 11.1 und an seiner der Luke 2 zugewandten Innenseite eine Durchblicköffnung 11.2. Diese beiden Öffnungen sind jeweils durch eine Scheibe aus durchsichtigem Material verschlossen. An seiner Oberseite ist das Ausblickteil 11 mit einem Deckel 11.3 fest abgeschlossen. Im Ausblickteil ist ein Spiegel 15 unter einem Winkel von 45° gegen die nach außen gerichtete Horizontale angeordnet, so daß der Strahlengang des Winkelspiegels aus der Richtung S von außen über den Spiegel 15 in Richtung S1 nach unten durch den Sichtkanal 5.1 verlaufend auf einen zweiten Spiegel 14.3 auftrifft, der im Einblickteil 14 unter einem Winkel von 135° zur nach innen gerichteten Horizontalen angeordnet ist und wird dort in Richtung zur Einblicköffnung 14.1 hin abgelenkt.

Wenn der Spiegel 15 als halbdurchlässiger Spiegel ausgebildet ist ergibt sich ein zweiter Strahlengang, der von außen in Richtung S durch den Spiegel 15 hindurch in Richtung S2 zur Durchblicköffnung 11.2 verläuft. Es kann in diesem Fall jederzeit sowohl durch die Einblicköffnung 14.1 als auch durch die Durchblicköffnung 11.2 beobachtet werden.

Bei einer ersten Variante dieser Ausführungsform ist der Spiegel 16 um eine Horizontale an seinem unteren Ende angeordnete Schwenkachse 16.1 nach unten in eine strichpunktiert angedeutete und mit 16′ bezeichnete Position schwenkbar, in der er auf einem Anschlag 12.4 aufliegt. In dieser Position verläuft der von außen aus Richtung S kommende Strahlengang geradlinig weiter in Richtung S2 und es ist ein direkter Durchblick von der Durchblicköffnung 12.2 zur Ausblicköffnung 12.1 möglich.

Das gleiche kann bei einer Variante der Ausführungsform erreicht werden, wenn der Spiegel 16 um eine in seiner Mitte angeordnete horizontale Achse 16.2 in eine ebenfalls strichpunktiert angedeutete und mit 16˝ bezeichnete Position schwenkbar ist, in der ebenfalls der Strahlengang aus der Richtung S geradlinig durchgeht in die Richtung S2.

In Fig. 4 ist eine weitere Ausführungsform eines Ausblickteils dargestellt, bei der in dem auf den Schutzblock 5 aufgesetzten Ausblickteil 13, das an seiner Oberseite mit einem Deckel 13.3 abgeschlossen ist und eine Ausblicköffnung 13.1 sowie eine Durchblicköffnung 13.2 besitzt, ein Spiegel 17 angeordnet ist, der zur Umlenkung des Strahlengangs aus der Richtung S in die Richtung S1 nach unten, wie bereits erwähnt, unter einem Winkel α = 45° zur nach außen gerichteten Horizontalen steht. Dieser Spiegel 17 ist zwischen zwei Prismen 18 und 19 aus optischem Glas angeordnet, deren Grundflächen 18.1 und 19.1 parallel zueinander in einem vorgegebenen Abstand verlaufen, so daß ein Zwischenraum entsteht, in welchem der Spiegel 17 liegt. Diese Ausführungsform hat zunächst den Vorteil, daß auch das Ausblickteil 13 mit optischem Glas ausgefüllt ist und somit einen verstärkten Schutz bildet. Um sowohl einen zum Einblickteil verlaufenden Strahlengang als auch einen zur Durchblicköffnung laufenden Strahlengang zu erhalten, sind mehrere in Fig. 4 dargestellte Varianten möglich.

Zunächst ist es bei einer ersten Variante möglich, den Spiegel 17 wiederum als halbdurchlässigen Spiegel auszubilden, was zur Folge hat, daß beide Strahlengänge S-S1 und S-S2 gleichzeitig vorhanden sind.

Weiterhin ist es möglich, den Spiegel 17 als starres Plattenelement auszubilden, welches aus dem Zwischenraum zwischen den beiden Prismen 18 und 19 in Pfeilrichtung S3 herausziehbar ist, so daß der Strahlengang S-S1 unterbrochen und der Strahlengang S-S2 freigegeben wird.

Schließlich ist es auch möglich, den Spiegel 17 als aufrollbares Folienelement auszubilden, das um eine horizontale Drehachse 17.1 herum soweit aufgewickelt wird, daß der Strahlengang S-S1 unterbrochen und der Strahlengang S-S2 freigegeben ist.

In Fig. 5 ist eine weitere Variante der Ausführungsform des Ausblickteils nach Fig. 4 dargestellt. In Fig. 5 sind die gleichen Bezugszeichen verwendet wie in Fig. 4 und mit einem "′" versehen.

Bei der Ausführungsform nach Fig. 5 ist, wie bereits oben erwähnt, der Spiegel 17′ als halbdurchlässiger Spiegel ausgebildet, und zwar als Teil eines üblichen Strahlteilers. Zu diesem Zweck sind innerhalb des Ausblickteils 13′ mit der Ausblicköffnung 13.1′, der Durchblicköffnung 13.2′ und dem Deckel 13.3′ zwei Prismen 18′ und 19′ mit ihren Grundflächen 18.1′ und 19.1′ direkt aneinandergesetzt, wobei die Grundflächen so verspiegelt sind, daß an der Trennstelle ein halbdurchlässiger Spiegel 17′ entsteht. Auf diese Weise sind auch bei dieser Ausführungsform beide Strahlengänge S-S1 und S-S2 gleichzeitig vorhanden.

## Patentansprüche

1. Kampffahrzeug, insbesondere Kampfpanzer, mit einer im gepanzerten Gehäusedach des Fahrzeugs angeordneten Luke, bei dem in der unmittelbaren Umgebung der Luke Winkelspiegel angeordnet sind, die jeweils ein im Außenraum angeordnetes Ausblickteil und ein im Innenraum des Fahrzeugs angeordnetes Einblickteil aufweisen, wobei zwischen Ausblickteil und Einblickteil ein durch das Gehäusedach geführter Sichtkanal für den optischen Strahlengang angeordnet ist, dadurch gekennzeichnet, daß der Sichtkanal (5.1) innerhalb eines auf das Gehäusedach (1) aufgesetzten Schutzblockes (5), wobei der Schutzblock (5) aus einzelnen übereinandergestapelten, aus optischem Glas bestehenden Plattenelementen (5.2-5.8) aufgebaut ist und der Sichtkanal (5.1) mindestens auf einem Teil seiner Länge mit optischem Glas ausgefüllt ist, das einstückig mit dem Schutzblockmaterial verbunden ist und an diesen Teil sich das Einblickteil (14) unmittelbar anschließt, während das Ausblickteil (11, 12, 13) an der Oberseite des Schutzblocks (5) aufgesetzt ist.

2. Kampffahrzeug nach Anspruch 1, dadurch gekennzeichnet, daß das aus optischem Glas bestehende Einblickteil (14) vom Innenraum des Fahrzeugs her in den Sichtkanal (5.1) eingesteckt ist.

3. Kampffahrzeug nach einem der Ansprüche 1 oder 2, dadurch gekennzeichnet, daß um die Luke (2) herum ein die Luke mindestens teilweise umfassender Schutzblock (5) angeordnet ist, auf dem die Ausblickteile (8, 10, 11) mehrerer in verschiedenen Ausblickrichtungen (C, A, B) angeordneter Winkelspiegel angeordnet sind.

## Claims

1. Combat vehicle, in particular a tank, having a hatch disposed in the armoured housing roof of the vehicle, wherein disposed in the immediate vicinity of the hatch are angle mirrors which have in each case a look-out part disposed in the exterior and a look-in part disposed in the interior of the vehicle, wherein disposed between the look-out part and the look-in part is a sighting channel for the optical path which is led through the housing roof, characterized in that the sighting channel (5.1) is disposed inside a protective block (5) mounted onto the housing roof (1), the protective block (5) being assembled from individual plate elements (5.2 - 5.8) made of optical glass which are stacked one on top of the other, and the sighting channel (5.1) at least along a part of its length being filled with optical glass which is integrally bonded to the protective block material, and the look-in part (14) directly adjoins said part while the look-out part (11, 12, 13) is mounted on the top of the protective block (5).

2. Combat vehicle according to claim 1, characterized in that the look-in part (14) made of optical glass is inserted from the interior of the vehicle into the viewing channel (5.1).

3. Combat vehicle according to one of claims 1 or 2, characterized in that disposed around the hatch (2) and at least partially embracing said hatch is a protective block (5), on which are disposed the look-out parts (8, 10, 11) of a plurality of angle mirrors arranged in various look-out directions (C, A, B).

## Revendications

1. Véhicule de combat, en particulier char blindé, comportant une écoutille disposée dans le toit du blindage du véhicule, à proximité immédiate de laquelle sont disposés des miroirs d'angle, lesquels présentent chacun une partie de visée vers l'extérieur disposée dans l'espace extérieur et une partie de visée vers l'intérieur disposée dans l'espace intérieur du véhicule, entre la partie de visée vers l'extérieur et la partie de visée vers l'intérieur, étant disposé un canal de visée passant à travers le toit du blindage pour le passage optique des rayons, caractérisé en ce que ledit canal de visée (5.1) est monté à l'intérieur d'un bloc de protection (5) monté sur le blindage (1), ledit bloc de protection (5) étant composé de plusieurs éléments en forme de plaquettes en verre optique (5.2-5.8) empilées les unes sur les autres et le canal de visée (5.1) étant rempli, au moins sur une partie de sa longueur, de verre optique réuni en une seule pièce au matériau constituant le bloc de protection, et en ce que, à cette partie, fait suite immédiatement la partie de visée vers l'intérieur (14), tandis que la partie de visée vers l'extérieur (11, 12, 13) est montée sur le côté supérieur du bloc de protection (5).

2. Véhicule de combat selon la revendication 1, caractérisé en ce que la partie de visée vers l'intérieur (14), constituée en verre optique, est enfichée à partir de l'espace intérieur du véhicule dans le canal de visée (5.1).

3. Véhicule de combat selon la revendication 1 ou 2, caractérisé en ce que, autour de l'écoutille (2), est disposé un bloc de protection entourant cette écoutille au moins partiellement sur lequel sont disposées les parties de visée vers l'extérieur (8, 10, 11) de plusieurs miroirs d'angle, eux-mêmes disposés dans différentes directions de visée vers l'extérieur (C, A, B).
